# FASCICULE DE BREVET EUROPEEN

(11) **EP 0 796 188 B1**
(45) Date de publication et mention de la délivrance du brevet: **30.12.1998**
(21) Numéro de dépôt: 95934201.5
(22) Date de dépôt: 12.10.1995
(51) Int. Cl.: B60T 13/52, B60T 17/00

(54) **SERVOMOTEUR DOTE D'UNE ENTREE D'AIR ADDITIONNEL A DEBIT ADAPTATIF**
SERVOMOTOR MIT ZUSÄTZLICHEM ADAPTIVEM LUFTEINLASS
SERVO WITH ADDITIONAL ADAPTIVE AIR INLET

(30) Priorité: 09.12.1994 FR 9414810
(43) Date de publication de la demande: 24.09.1997
(73) Titulaire: Bosch Systemes de Freinage, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR)
(74) Mandataire: Bentz, Jean-Paul
(86) Numéro de dépôt international: FR9501327
(87) Numéro de publication internationale: WO9617757

(56) Documents cités:
- EP-A- 0 405 603
- DE-U- 9 005 629
- GB-A- 2 051 270
- GB-A- 2 247 502
- US-A- 4 961 846

## Description

La présente invention concerne un servomoteur pneumatique de freinage utilisant des première et seconde sources de pression d'air délivrant des première et seconde pressions respectives et différentes ce servomoteur comprenant une enveloppe rigide séparée par au moins une cloison mobile étanche en au moins deux chambres dont la première est reliée à la première source et dont la seconde est susceptible d'être sélectivement reliée, au moyen d'un clapet, à l'une quelconque des deux sources, la cloison mobile étant susceptible d'être sollicitée par la différence entre les pressions établies dans les chambres pour entraîner un piston pneumatique essentiellement cylindrique coulissant de façon étanche dans l'enveloppe et portant le clapet, l'intérieur de ce piston et notamment le clapet étant séparés de la seconde source par un filtre d'épuration.

Des dispositifs de ce type, bien connus dans l'art antérieur, sont aujourd'hui utilisés sur un très grand nombre de véhicules à moteur.

Malgré le caractère traditionnel des techniques concernées, les servomoteurs continuent de faire l'objet de recherches importantes, visant à en optimiser la caractéristiques de fonctionnement.

Au nombre de ces recherches figurent notamment des tentatives pour réduire à la fois le niveau sonore en fonctionnement des servomoteurs et leur temps de réponse à la suite d'une sollicitation, la réduction simultanée de ces deux paramètres étant rendue très délicate par le fait qu'un servomoteur est d'autant plus silencieux que l'air qu'il admet dans le chambre arrière est plus filtré, alors qu'il présente un temps de réponse d'autant plus court que l'air qu'il admet est moins filtré.

Ainsi, bien qu'un servomoteur à temps de réponse réduit soit connu du document EP-A-0 405 603, ce servomoteur ne parvient pas à se libérer du compromis précédemment décrit, dans la mesure où la réduction de son temps de réponse implique nécessairement le choix d'un filtre peu sélectif donc un niveau de bruit relativement élevé en fonctionnement.

L'invention se situe dans ce contexte, et a pour but de proposer un servomoteur qui réponde à l'attente du public pour ce qui concerne la réduction du niveau sonore en fonctionnement, tout en offrant un temps de réponse au moins aussi satisfaisant que ceux des servomoteurs de l'art antérieur, dans tous les cas où le besoin d'un temps de réponse court se fait sentir.

A cette fin, le servomoteur de l'invention est essentiellement caractérisé en ce qu'il comporte des moyens d'obturation à ouverture commandée, installés entre la seconde source de pression et l'intérieur du piston et contrôlant une voie d'admission d'air qui évite la traversée du filtre, et des moyens élastiques, sensibles à une différence de pression entre l'intérieur du piston et la seconde source de pression, pour autoriser sélectivement l'ouverture des moyens d'obturation lorsque cette différence de pression dépasse un seuil déterminé.

Selon un premier mode possible de réalisation, dans lequel le clapet est commandé par une tige de commande, le servomoteur de l'invention est caractérisé en ce que le filtre adopte la forme d'un cylindre enserrant la tige de commande, en ce que les moyens d'obturation comprennent un siège de valve formé à la périphérie interne du piston et un joint annulaire souple obturant un espace libre entre le filtre et le siège de valve en s'appuyant sur ce dernier, et en ce que les moyens élastiques comprennent un ressort appliquant le joint sur le siège de valve, à l'encontre d'une force susceptible d'être exercée sur ce joint par la différence de pression entre l'intérieur dit piston et la seconde source de pression.

Selon un second mode possible de réalisation, dans lequel le piston pneumatique est logé, à l'extérieur de l'enveloppe, dans un soufflet de protection tubulaire réalisé au moins partiellement dans un matériau élastomère poreux et assurant le rôle de filtre, le servomoteur de l'invention est caractérisé en ce que les moyens d'obturation comprennent au moins une lèvre réalisée sous la forme d'une fente pratiquée dans le soufflet poreux, et en ce que les moyens élastiques comprennent ait moins un bec allongé formé dans le soufflet et présentant des bords qui convergent vers ladite fente et qui la maintiennent élastiquement fermée aussi longtemps que la différence de pression entre l'intérieur dit piston et la seconde source de pression est inférieure audit seuil déterminé.

D'autres caractéristiques et avantages de l'invention ressortiront clairement de la description qui en est faite ci-après, à titre indicatif et nullement limitatif en référence aux dessins annexés, dans lesquels :
- la Figure 1 est une vue schématique en coupe d'un système de freinage à assistance pneumatique utilisant un servomoteur classique;
- la Figure 2 est une vue en coupe partielle d'un servomoteur conforme à un premier mode de réalisation de l'invention;
- la Figure 3 est une vue en coupe partielle suivant la ligne III-III de la Figure 2;
- la Figures 4 est une vue en coupe partielle d'un servomoteur conforme à un second mode de réalisation de l'invention; et
- la Figure 5 est une vue en coupe partielle suivant la ligne V-V de la Figure 4.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale dit perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 susceptible d'entraîner un piston pneumatique 5, essentiellement cylindrique et mobile à l'intérieur de l'enveloppe 3.

La chambre avant 3a, dont la face avant est fermée de façon étanche par le maître-cylindre 2, est en permanence raccordée à une source de basse pression D à travers une valve anti-retour 6.

La chambre arrière 3b est en revanche susceptible d'être sélectivement raccordée soit à la source de basse pression D, soit à une source de haute pression, par exemple à l'atmosphère A. A cette fin, l'accès à la chambre arrière 3b est contrôlé par un clapet 7 et un plongeur 8, ce dernier étant relié une pédale de frein 9 par l'intermédiaire d'une tige de commande 10.

Lorsque la tige de commande 10 est en position de repos, en l'occurrence tirée vers la droite, le clapet 7 établit normalement une communication entre les deux chambres 3a et 3b du servomoteur.

La chambre arrière 3b étant alors soumise à la même dépression que la chambre avant 3a, le piston 5 est repoussé vers la droite, en position de repos, par un ressort de rappel 11. L'actionnement du plongeur 8 par un mouvement de la tige de commande 10 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique A.

La différence de pression entre les deux chambres, alors ressentie par la cloison mobile 4, exerce sur cette dernière une poussée qui tend à la déplacer vers la gauche et à lui permettre d'entraîner le piston 5 qui se déplace à son tour en comprimant le ressort 11.

L'effort de freinage exercé sur le plongeur 8 par la tige de commande 10, ou "force d'entrée", et l'effort d'assistance au freinage, ou "force d'assistance", résultant de la poussée de la cloison mobile 4, se conjuguent sur un disque de réaction 12 pour constituer une force d'actionnement transmise au maître-cylindre par l'intermédiaire d'une tige de poussée 13.

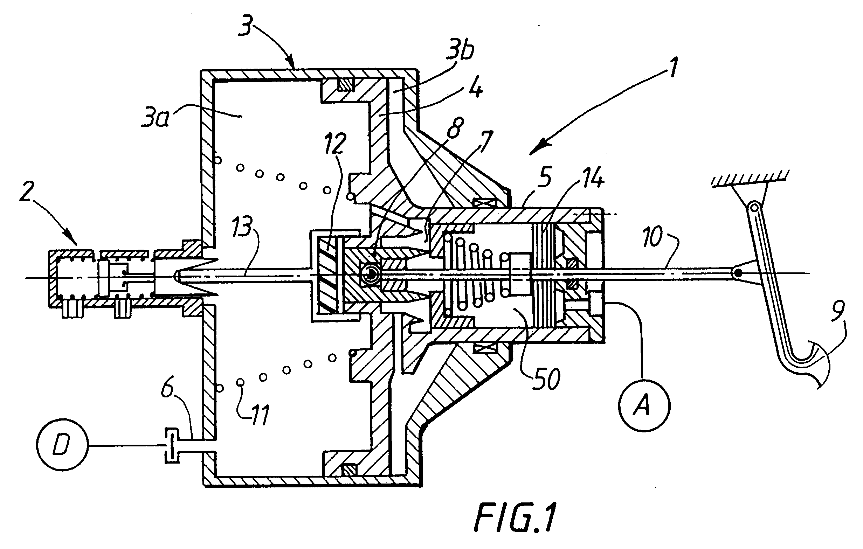

Comme le montre la Figure 1, le servomoteur comprend classiquement un filtre d'épuration 14, destiné à éviter toute pollution, par l'atmosphère A, de l'intérieur 50 du piston pneumatique, du clapet 7, et de la chambre arrière 3b.

Bien qu'un tel filtre soit nécessaire au moins pour atténuer le bruit de fonctionnement du servomoteur, il engendre un ralentissement du flux d'air utilisable par ce dernier, et dégrade le temps de réponse du servomoteur d'une façon d'autant plus sensible qu'il assure une isolation phonique importante.

Pour remédier à ce problème, le servomoteur de l'invention comporte des moyens d'obturation à ouverture commandée, installés entre la seconde source de pression A et l'intérieur 50 du piston et contrôlant une voie d'admission d'air qui évite la traversée du filtre 14, et des moyens élastiques, sensibles à une différence de pression entre l'intérieur 50 du piston et la seconde source de pression A, pour autoriser sélectivement l'ouverture des moyens d'obturation lorsque cette différence de pression dépasse un seuil déterminé.

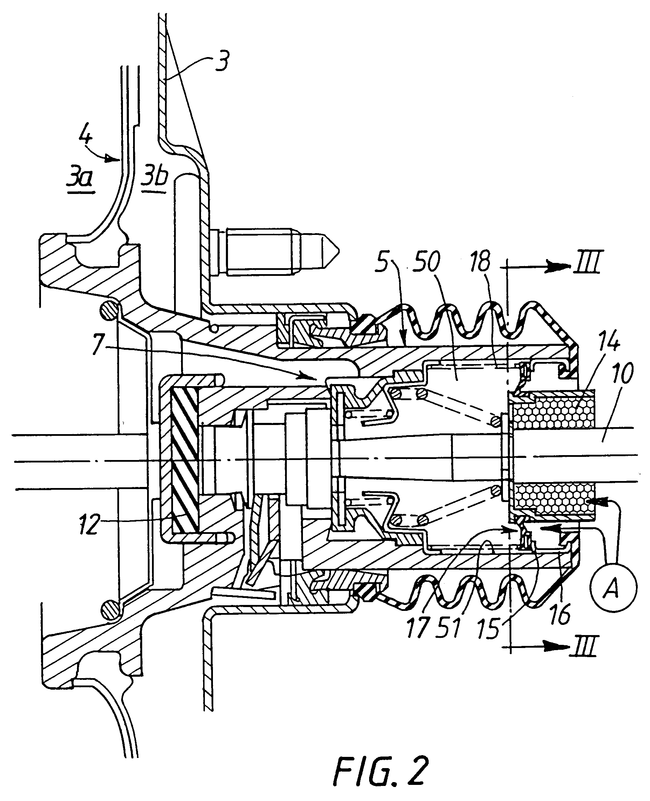

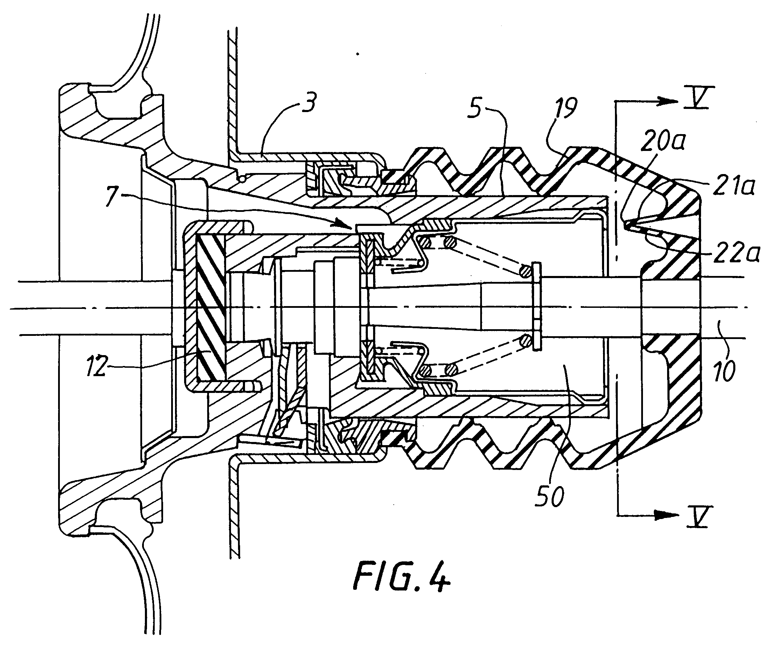

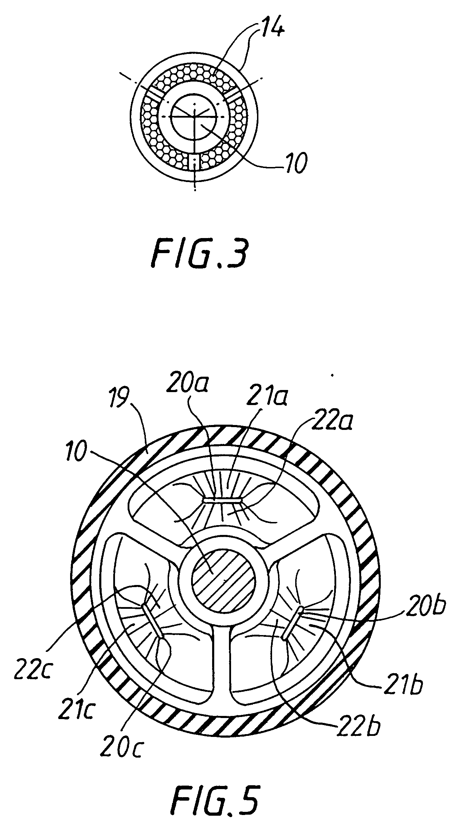

Par exemple, selon le mode de réalisation des figure 2 et 3, dans lequel le filtre 14 adopte la forme d'un cylindre enserrant la tige de commande 10, les moyens d'obturation comprennent un siège de valve 15 formé a la périphérie interne 51 du piston par une bague 16, et un joint annulaire souple 17 solidaire du filtre 14 par son bord interne et s'appuyant par sa périphérie sur le siège de valve 15 pour obturer l'espace libre défini entre ce filtre et ce siège, tandis que les moyens élastiques comprennent un ressort 18 appliquant le joint 17 sur le siège de valve 15, à l'encontre de la force qui est exercée sur ce joint par la différence de pression, lorsqu'elle existe, entre l'intérieur 50 du piston et la seconde source de pression A.

Le fonctionnenment de ce servomoteur est le suivant.

Lorsque le servomoteur est sollicité de façon brusque, la force de succion exercée par la source de dépression D sur la cloison mobile 4 provoque à l'intérieur 50 du piston 5 une chute de pression instantanée importante et d'ailleurs d'autant plus forte que la résistance offerte au passage de l'air par le filtre 14 est élevée.

Dans ces conditions, le joint souple 17, dont les deux faces sont soumises à des pressions différentes, subit une force qui, si elle est supérieure à la force exercée par le ressort 18, décolle la périphérie du joint 17 du siège 15 à l'encontre de la force exercée par ce ressort et offre ainsi un libre passage d'air entre la seconde source A et l'intérieur 50 du piston 5.

Si en revanche le servomoteur est sollicité de façon progressive, la différence de pression entre l'intérieur 50 du servomoteur et la seconde source A reste modérée et la force subie par le joint souple 17 est insuffisante pour vaincre la force qu'exerce le ressort 18 sur ce joint en l'appliquant sur le siège 15.

Comme le comprendra aisément l'homme de l'art, ces dispositions permettent d'optimiser le temps de réponse et le niveau sonore de fonctionnement du servomoteur, en permettant d'obtenir un temps de réponse minimal dans les situations de freinage d'urgence qui exigent un tel temps de réponse et dans lesquelles le confort d'un faible niveau sonore est sans objet, et en réduisant le niveau sonore dans les situations dans lesquelles l'augmentation du temps de réponse due à la traversée du filtre par l'air n'est assortie d'aucune conséquence, situations dans lesquelles la sollicitation du servomoteur est de toute façon trop lente pour pouvoir tirer avantage d'un temps de réponse très court.

Selon le mode de réalisation des figures 4 et 5, dans lequel le piston pneumatique 5 est logé, à l'extérieur de l'enveloppe, dans un soufflet de protection tubulaire 19 réalisé au moins partiellement dans un matériau élastomère poreux et assurant le rôle de filtre, les moyens d'obturation comprennent avantageusement au moins une lèvre réalisée sous la forme d'une fente, telle que 20a, 20b, 20c, pratiquée dans le soufflet poreux 19, et les moyens élastiques comprennent au moins un bec allongé formé dans le soufflet et présentant des bords tels que 21a, 22a, 21b, 22b, 21c, 22c qui convergent vers la fente 20a, 20b, 20c et qui la maintiennent élastiquement fermée aussi longtemps que la différence de pression entre l'intérieur 50 du piston et la seconde source de pression A est inférieure à un seuil déterminé.

Comme le comprendra aisément l'homme de l'art, le principe de fonctionnement du second mode de réalisation est identique à, celui du premier, à savoir que le passage d'air direct et supplémentaire qu'offrent les lèvres 20a, 20b, et 20c entre la seconde source A et l'intérieur 50 du servomoteur ne s'ouvre que lorsque le servomoteur est sollicité de façon brusque, c'est-à-dire dans le cas d'un coup de frein rendant utile le recours à un temps de réponse aussi court que possible.

## Revendications

1. Servomoteur pneumatique de freinage utilisant des première et seconde sources de pression d'air (D, A) délivrant des première et seconde pressions respectives et différentes, ce servomoteur comprenant une enveloppe rigide (3) séparée par au moins une cloison mobile étanche (4) en au moins deux chambres (3a, 3b) dont la première (3a) est reliée à la première source (D) et dont la seconde (3b) est susceptible d'être sélectivement reliée, au moyen d'un clapet (7), à l'une quelconque des deux sources (D, A), la cloison mobile étant susceptible d'être sollicitée par la différence entre les pressions établies dans les chambres pour entraîner un piston pneumatique (5) essentiellement cylindrique coulissant de façon étanche dans l'enveloppe et portant le clapet (7), l'intérieur de ce piston et notamment le clapet (7) étant séparés de la seconde source par un filtre d'épuration (14), caractérisé en ce qu'il comporte des moyens d'obturation (15, 17, 20a, 20b, 20c) à ouverture commandée, installés entre la seconde source de pression (A) et l'intérieur (50) du piston et contrôlant une voie d'admission d'air qui évite la traversée du filtre, et des moyens élastiques (18, 21a, 22a, 21b, 22b, 21c, 22c), sensibles à une différence de pression entre l'intérieur du piston et la seconde source de pression, pour autoriser sélectivement l'ouverture des moyens d'obturation lorsque cette différence de pression dépasse un seuil détermine.

2. Servomoteur pneumatique suivant la revendication 1, dans lequel le clapet est commandé par une tige de commande (10), caractérisé en ce que le filtre (14) adopte la forme d'un cylindre enserrant la tige de commande, en ce que les moyens d'obturation comprennent un siège de valve (15) formé à la périphérie interne du piston et un joint annulaire souple (17) obturant un espace libre entre le filtre et le siège de valve en s'appuyant sur ce dernier, et en ce que les moyens élastiques comprennent un ressort (18) appliquant le joint sur le siège de valve, à l'encontre d'une force susceptible d'être exercée sur ce joint par la différence de pression entre l'intérieur du piston et la seconde source de pression.

3. Servomoteur pneumatique suivant la revendication 1, dans lequel le piston pneumatique est logé, à l'extérieur de l'enveloppe, dans un soufflet de protection tubulaire (19) réalisé au moins partiellement dans un matériau élastomère poreux et assurant le rôle de filtre, caractérisé en ce que les moyens d'obturation comprennent au moins une lèvre (20a, 20b, 20c) réalisée sous la forme d'une fente pratiquée dans le soufflet poreux, et en ce que les moyens élastiques comprennent au moins un bec allongé formé dans le soufflet et présentant des bords (21a, 22a, 21b, 22b, 21c, 22c) qui convergent vers ladite fente et qui la maintiennent élastiquement fermée aussi longtemps que la différence de pression entre l'intérieur du piston et la seconde source de pression est inférieure audit seuil déterminé.

## Claims

1. Pneumatic brake booster using first and second sources of air pressure (D, A) delivering first and second respective and different pressures, this booster comprising a rigid casing (3) divided by at least one leaktight movable partition (4) into at least two chambers (3a, 3b), the first (3a) of which is connected to the first source (D), and the second (3b) of which is capable of being connected selectively, by means of a valve (7), to either one of the two sources (D, A), the movable partition being capable of being urged by the difference between the pressures established in the chambers so as to drive an essentially cylindrical pneumatic piston (5) which slides in leaktight fashion inside the casing and carries the valve (7), the inside of this piston and especially the valve (7) being separated from the second source by an impurities filter (14), characterized in that it includes closing-off means (15, 17, 20a, 20b, 20c), the opening of which is controlled, installed between the second pressure source (A) and the inside (50) of the piston and controlling an air inlet path which avoids passing through the filter, and elastic means (18, 21a, 22a, 21b, 22b, 21c, 22c), which are sensitive to a difference in pressure between the inside of the piston and the second source of pressure, in order to allow the closing-off means to be opened selectively when this pressure difference exceeds a given threshold.

2. Pneumatic booster according to Claim 1, in which the valve is controlled by a control rod (10), characterized in that the filter (14) adopts the shape of a cylinder surrounding the control rod, in that the closing-off means comprise a valve seat (15) formed at the internal periphery of the piston and a flexible annular seal (17) closing off a gap between the filter and the valve seat and bearing on the latter, and in that the elastic means comprise a spring (18) pressing the seal onto the valve seat, against a force which may be exerted on this seal by the difference in pressure between the inside of the piston and the second source of pressure.

3. Pneumatic booster according to Claim 1, in which the pneumatic piston is housed, outside the casing, in a protective tubular gaiter (19) made at least partially from a porous elastomeric material and acting as a filter, characterized in that the closing-off means comprise at least one lip (20a, 20b, 20c) produced in the form of a slit made in the porous gaiter, and in that the elastic means comprise at least one elongate spur formed in the gaiter and exhibiting edges (21a, 22a, 21b, 22b, 21c, 22c) which converge towards the said slit and keep it elastically closed for as long as the pressure difference between the inside of the piston and the second pressure source is below the said given threshold.

## Patentansprüche

1. Pneumatischer Brems-Servomotor, der sich einer ersten und einer zweiten Druckluftquelle (D, A) bedient, die einen ersten bzw. einen zweiten, sich unterscheidenden Druck abgeben, wobei der Servomotor ein starres Gehäuse (3) umfaßt, das durch mindestens eine bewegliche, dichte Trennwand (4) in mindestens zwei Kammern (3a, 3b) unterteilt ist, von denen die erste (3a) an die erste Quelle (D) angeschlossen ist und die zweite (3b) über ein Ventilelement (7) wahlweise an eine beliebige der beiden Quellen (D, A) angeschlossen werden kann, wobei die bewegliche Trennwand durch den Unterschied der Drücke, die sich in den Kammern aufgebaut haben, beaufschlagt werden kann, um einen im wesentlichen zylindrischen pneumatischen Kolben (5) mitzunehmen, der auf dichte Weise in dem Gehäuse gleitet und das Ventilelement (7) trägt, wobei das Innere des Kolbens und insbesondere das Ventilelement (7) von der zweiten Quelle durch einen Reinigungsfilter (14) getrennt sind, dadurch gekennzeichnet, daß er Verschlußmittel (15, 17, 20a, 20c) umfaßt, die gesteuert geöffnet werden können, zwischen der zweiten Druckquelle (A) und dem Inneren (50) des Kolbens untergebracht sind und einen Lufteinlaßweg überwachen, der den Durchgang durch den Filter, und elastische Mittel (18, 21,a, 22a, 21b, 22b, 21c, 22c), die auf einen Druckunterschied zwischen dem Inneren des Kolbens und der zweiten Druckquelle reagieren, um die wahlweise Öffnung der Verschlußmittel zuzulassen, wenn der Druckunterschied eine bestimmte Schwelle überschreitet.

2. Pneumatischer Servomotor nach Anspruch 1, worin das Ventilelement durch eine Steuerstange (10) gesteuert wird, dadurch gekennzeichnet, daß der Filter (14) die Form eines Zylinders annimmt, der die Steuerstange fest umfaßt, daß die Verschlußmittel einen Ventilsitz (15) umfassen, der am inneren Umfang des Kolbens ausgebildet ist, und eine biegsame ringförmige Dichtung (17), die einen freien Raum zwischen dem Filter und dem Ventilsitz, an dem sie anliegt, verschließt, und daß die elastischen Mittel eine Feder (18) umfassen, die die Dichtung gegen den Ventilsitz entgegen einer Kraft drückt, die durch den Druckunterschied zwischen dem Inneren des Kolbens und der zweiten Druckquelle auf die Dichtung ausgeübt werden kann.

3. Pneumatischer Servomotor nach Anspruch 1, wobei der pneumatische Kolben außerhalb des Gehäuses in einem röhrenförmigen Schutzbalg (19) untergebracht ist, der zumindest teilweise aus einem porösen Elastomermaterial besteht und die Funktion des Filters erfüllt, dadurch gekennzeichnet, daß die Verschlußmittel mindestens eine Lippe (20a, 20b, 20c) umfassen, die in Form eines Schlitzes ausgebildet ist, der in dem porösen Balg vorgesehen ist, und daS die elastischen Mittel mindestens eine längliche Tülle umfassen, die in dem Balg ausgebildet ist und Ränder (21a, 22a, 21b, 22b, 21c, 22c) hat, die zum Schlitz hin zusammenlaufen und ihn so lange elastisch geschlossen halten, bis der Druckunterschied zwischen dem Inneren des Kolbens und der zweiten Druckquelle unterhalb der bestimmten Schwelle liegt.
